(19) Europäisches Patentamt
European Patent Office
Office européen des brevets

(11) **EP 1 916 798 B1**

## (12) EUROPEAN PATENT SPECIFICATION

(45) Date of publication and mention
of the grant of the patent:
**29.02.2012 Bulletin 2012/09**

(51) Int Cl.:
***H04L 12/24*** *(2006.01)*

(21) Application number: **06291666.3**

(22) Date of filing: **23.10.2006**

(54) **Method of recovering structure of a tree logically arranged database in a network management system**

Verfahren um die Struktur einer Datenbank die logisch als Baum in einem Netzwerk Management System vorliegt, zurückzugewinnen

Procédé pour récupérer une structure d'une base de donnée organisé en arborescence dans un système de gestion de réseau

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**30.04.2008 Bulletin 2008/18**

(73) Proprietor: **Alcatel Lucent**
**75007 Paris (FR)**

(72) Inventors:
• **Pasquale, Donadio**
**80129 Napoli (Milano) (IT)**
• **Paparella, Andrea**
**21052 Busto Arsizio (Varese) (IT)**
• **Riglietti, Roberto**
**20059 Vimercate (Milano) (IT)**

(74) Representative: **Schmidt, Werner Karl**
**Alcatel Lucent**
**Intellectual Property & Standards**
**70430 Stuttgart (DE)**

(56) References cited:
**WO-A-95/34975** **US-A- 5 978 845**
**US-A1- 2002 107 978**

• **EDITOR OF THIS VERSION: R PRESUHN BMC SOFTWARE ET AL: "Version 2 of the Protocol Operations for the Simple Network Management Protocol (SNMP)" IETF STANDARD, INTERNET ENGINEERING TASK FORCE, IETF, CH, December 2002 (2002-12), pages 1-31, XP015009210 ISSN: 0000-0003**
• **CASE J ET AL: "RFC1157: A Simple Network Management Protocol (SNMP)" INTERNET CITATION, [Online] May 1990 (1990-05), pages 1-24, XP002163804 Retrieved from the Internet: URL:http://www.faqs.org/rfcs/rfc1157.htm> [retrieved on 2001-03-23]**

EP 1 916 798 B1

**Description**

**Technical field**

The present invention generally relates to management of telecommunication networks. In particular, the present invention relates to a method of recovering a structure of a tree logically arranged database, e.g. at least a portion of a MIB, of a network element in a telecommunication network. Further, the present invention relates to a network management system, a network element and a telecommunication network for implementing such a method.

**Background art**

It is known that a telecommunication network comprises a plurality of network elements for supporting transmission of traffic. In circuit-switched telecommunication networks, traffic is typically carried by TDM (Time Division Multiplexing) frames, whereas in packet-switched networks traffic is carried by packets.

Typically, a telecommunication network is provided with a network management system, which is adapted to perform a number of management operations on network elements. Such operations include: network element configuration, monitoring of alarms, management of errors and/or faults occurring at a network element, protection of the connections providing a back-up connection in case of a fault on a segment on a nominal connection, performance monitoring, or the like. The network management system includes a software application running on hardware, like for example a processor of a personal computer, a workstation or a server. For interacting with network elements, a network management system typically has a dedicated module which is termed "manager".

Each network element typically has an "agent", i.e. a module which is adapted to interact with the manager of the network management system. Communication between manager and agent is based upon a management protocol, which depends on the network type. In circuit-switched networks, an exemplary management protocol is Q3. In packet-switched networks, an exemplary management protocol is the Simple Network Management Protocol, or briefly SNMP.

Each network element to be managed has a database, which stores information relating to the network element resources. The logical structure according to which such information is organized in the database depends both on the type of network element and on the type of management protocol.

For instance, in case of the above cited SNMP, information stored in the database is organized according to an object-oriented structure, which is typically termed Management Information Base or, briefly, MIB.

A MIB generally comprises a number of nodes arranged according to a tree diagram having a number of layers. Nodes belonging to a same layer have the same distance (expressed in number of nodes) from the MIB root. Nodes belonging to the $k^{th}$ layer, k being an integer equal to or greater than 1, have a distance of k nodes from the MIB root.

Each node of the MIB may represent either a managed object or an object instance. A managed object substantially corresponds to a given resource of the network element, such as a board, a port, etc. An object instance substantially correspond to a resource attribute. For instance, in case the resource is a board, exemplary resource attributes may be: board type, alarms the board can generate, board part-number, etc. A managed object typically comprises at least an object instance. A scalar managed object comprises a single object instance. On the other hand, a tabular managed object comprises at least two object instances, which are arranged according to a sub-tree whose root represents the tabular managed object. The leaves of the sub-tree represent complete object instances, while possible intermediate nodes of the sub-tree represent partial object instances.

Each leaf of a MIB has a name, which is termed "unique instance identifier". Such a unique instance identifier is a sequence of N integers separated by ".", wherein N is a number equal to the index k of the layer the leaf belongs to, increased by 1. Each integer composing the unique instance identifier is typically termed "component", and it may assume a value comprised between 0 and $2^{32}$-1. A first portion of the unique instance identifier, comprising the n most significant components, identifies the managed object to which the object instance belongs, and it is therefore termed "object identifier". n is an integer equal to the index k of the layer to which the node representing the managed object belongs. The second portion of the unique instance identifier, which comprises the remaining N-n least significant components, identifies the specific object instance.

Also each intermediate node typically has a name. In particular, if an intermediate node is placed at the $k^{th}$ layer along the path connecting the root and a leaf having a given unique instance identifier, the name of such an intermediate node corresponds to the k+1 most significant components of the unique instance identifier. In case such an intermediate node represents a managed object, its name corresponds to the above cited object identifier.

According to the SNMP, the manager of a network management system and the agent of each network element to be managed communicate by exchanging SNMP messages. An SNMP message typically comprises a header and a payload, which is termed SNMP Protocol Data Unit (or briefly, PDU). As described in RFC 3416, December 2002, paragraph 3, a PDU comprises information such as a PDU type (e.g. "get", "set", "getNext", "getBulk", "response", "trap", etc.) and a plurality of fields which are termed "variable bindings". A variable binding typically comprises a name of a node representing the object instance upon which the operation specified by the PDU type has to be performed, and a value.

In case a network management system wishes to know the attribute values of a given resource of a network element, it may send to the agent of the network element a number of SNMP messages comprising "getNext" PDUs. In particular, as described by RFC 1157, May 1990, paragraph 4.1.3, a "getNext" PDU comprises, in a variable binding, a name of a node (either an intermediate node or a leaf) and a predefined value "null". Further, a "getNext" PDU requires a "response" PDU from the agent, comprising name and value of the first leaf following the node having the name comprised in the "getNext" PDU. The first leaf is determined according to a predefined order, which is termed "lexicographical order".

The lexicographical order indicates the order according to which the nodes (both intermediate nodes and leaves) of a MIB must be read. Typically, the lexicographical order proceeds "vertically", i.e. once a given node is read, the successive node to be read is a possible child of the given node. After a leaf is read, the successive node to be read is the node belonging to the lowest layer (i.e. the layer nearest to the MIB root) which has in common with the read leaf an ancestor of the highest layer among all the nodes of the MIB which have not been read yet.

Further, the SNMP provides a "getBulk" PDU, which is similar to the above "getNext" PDU, but which requires as a response from the agent a "response" PDU comprising names and values of a number of nodes consecutive according to the lexicographical order.

For performing management operations, a network management system may need to recover the structure of a MIB of a given network element, or to recover the structure of a portion of the MIB (for instance, a sub-tree representing a tabular managed object).

Currently, for recovering the structure of a (portion of a) MIB, the manager of a network management system may send a sequence of "getNext" or "getBulk" PDUs to the agent of a network element, and then it may process the "response" PDUs received from the agent.

## Object and summary of the invention

The Applicant has noticed that the above known solution for allowing a network management system to recover the structure of a (portion of a) MIB has some drawbacks.

First of all, in case the "getNext" PDU is employed, the manager disadvantageously has to send to the agent a number of PDUs corresponding to the number of leaves comprised into the (portion of the) MIB whose structure has to be recovered. This may disadvantageously require to send a high number of PDUs, thus implying a high bandwidth consumption and a long time for completing the structure recovery operation. This problem is going to worsen in the future, since network elements are becoming even more complex, thus comprising an increasing amount of resources. Therefore, their MIBs comprise an increasing number of leaves.

Further, the "getNext" and "getBulk" PDUs disadvantageously provide information (i.e. name and value) only for leaves. Therefore, the whole structure comprising both intermediate nodes and leaves can be recovered only by processing information about leaves. However, this disadvantageously requires a high computational effort at the NMS. Further, this does not allow to discover portion of the MIB comprising only non accessible nodes.

Further, the "getNext" and "getBulk" PDUs require as a response from the agent a "response" PDU comprising also the values of the leaves. However, these values are not useful for recovering the structure of the (portion of the) MIB. Therefore, disadvantageously, part of the bandwidth allocated for transmitting SNMP PDUs is needlessly employed for transmitting superfluous information.

Further, the "response" PDUs sent by the agent to the network management system in response to "getNext" or "getBulk" PDUs comprise redundant information. Indeed, unique instance identifiers comprised into the "response" PDUs refer to nodes which are consecutive according to the lexicographical order. Therefore, at least a portion of the unique instance identifiers may be identical. Therefore, disadvantageously, this portion is needlessly inserted into each "response" PDU, thus wasting a part of the bandwidth allocated for transmitting SNMP PDUs.

Therefore, the general object of the present invention is providing a method, a network management system and a network element for recovering, at a network management system, a structure of a tree logically arranged database, e.g. at least a portion of a MIB, which overcomes the aforesaid problems.

In particular, an object of the present invention is providing a method, a network management system and a network element for recovering, at a network management system, a structure of a tree logically arranged database, e.g. at least a portion of a MIB, which allows to reduce the number of messages exchanged between manager and agent, to reduce redundancy of information comprised into such messages, and to substantially eliminate from such messages information which are superfluous for performing the recovery operation. This would advantageously allow to perform the recovery operation in a shorter time and by using less bandwidth then by using "getNext" and "getBulk" PDUs currently provided by SNMP.

According to a first aspect, the present invention provides a method of recovering, at a network management system, a structure of at least portion of a tree logically arranged database of a network element of a telecommunication network. The tree logically arranged database stores information relative to resources of the network element, and the portion of the tree logically arranged database comprises a set of nodes arranged at a k-th layer of the tree logically arranged database. The method comprises the following steps: transmitting from the network management system to the network element a structure recovery request comprising an identifier of a root of the portion of tree logically arranged database and an information indicative of the k-th layer; receiving a response message at the network management system from the network element, the response message comprising, for at least one node of the set of nodes, a least significant component of a name of the node, the name corresponding to a sequence of k+1 components; and processing, at the network management system, the response message by processing the least significant component, thus recovering the structure of the portion of the tree logically arranged database.

Preferably, the structure recovery request has a first sequence having a most significant part and a least significant part, the most significant part corresponding to the identifier, and a least significant part corresponding to said information indicative of said k-th layer, said information indicative of said k-th layer comprising a number of integers, wherein the number of integers is equal to a distance between a layer to which the root belongs and the layer at which said set of nodes is arranged.

Profitably, the structure recovery request is formatted as a first Protocol Data Unit, and the first sequence is comprised in a variable binding field of the first Protocol Data Unit.

Preferably, the set of nodes is arranged according to a predetermined order, and the response message comprises a list including, for each node of the set of nodes, a part of the name of the node, the list being ordered according to the predetermined order.

Alternatively, the set of nodes includes a sub-set of nodes arranged according to a predetermined order, and the response message comprises a list including, for each node of the sub-set of nodes, a least significant part of a name of the node, the list being ordered according to the predetermined order. In this case, profitably, the response message further comprises an information indicative of a node which immediately follows, according to the predetermined order, the sub-set of nodes.

Profitably, the response message is formatted as a second Protocol Data Unit, and the list is comprised in a variable binding field of the second Protocol Data Unit.

According to a second aspect, the present invention provides a network management system for recovering a structure of at least portion of a tree logically arranged database of a network element of a telecommunication network. The tree logically arranged database stores information relative to resources of the network element, and the portion of the tree logically arranged database comprises a set of nodes arranged at a k-th layer of the tree logically arranged database. The network management system comprises a manager which in turn comprises: A) a transmitter/receiver adapted to i) transmit to said network element a structure recovery request comprising: an identifier of a root of said portion of said tree logically arranged database; and an information indicative of said k-th layer; and to ii) receive a response message from said network element, said response message comprising, for at least one node of said set of nodes, a least significant component of a name of said at least one node, said name corresponding to a sequence of k+1 components; and B) a processor for processing said response message by processing said least significant component, thus recovering said structure of said portion of said tree logically arranged database.

Preferably, the transmitter/receiver is further adapted to combine the identifier and the information indicative of the k-th layer in a first sequence having a most significant part corresponding to the identifier, and a least significant part corresponding to said information indicative of said k-th layer, said information indicative of said k-th layer comprising a number of integers, the number of integers being equal to a distance between a layer to which the root belongs and the k-th layer at which said set of nodes is arranged.

Profitably, the transmitter/receiver is further adapted to format the structure recovery request as a first Protocol Data Unit, and to insert the first sequence in a variable binding field of the first Protocol Data Unit.

According to a third aspect, the present invention provides a network element of a telecommunication network, which is adapted to interact with a network management system for recovering a structure of at least portion of a tree logically arranged database comprised the network element. The tree logically arranged database stores information relative to resources of the network element, and the portion comprises a set of nodes arranged at a k-th layer of the tree logically arranged database. The network element comprises an agent which is adapted to receive from the network management system a structure recovery request comprising an identifier of a root of the portion of the tree logically arranged database and an information indicative of the k-th layer, and to transmit a response message to the network management element, the response message comprising, for at least one node of the set of nodes, a least significant component of a name of the node, said name comprising a sequence of k+1 components.

Profitably, the set of nodes is arranged according to a predetermined order, and the agent is adapted to insert in the response message a list including, for each node of the set of nodes, a least significant component of the name of the node, the list being ordered according to the predetermined order.

Alternatively, the set of nodes includes a sub-set of nodes arranged according to a predetermined order, and the agent is adapted to insert in the response message a list including, for each node of the sub-set of nodes, a least significant component of a name of the node, the list being ordered according to the predetermined order. In this case, preferably, the agent is further adapted to insert in the response message an information indicative of a node which immediately follows, according to the predetermined order, the sub-set of nodes.

Profitably, the agent is further adapted to format the response message as a second Protocol Data Unit, and to insert the list in a variable binding field of the second Protocol Data Unit.

According to a fourth aspect, the present invention provides a telecommunication network comprising a network management system according to the second aspect of the present invention, and a network element according to the third aspect of the present invention.

## Brief description of the drawings

The present invention will become more clear by reading the following detailed description, given by way of example and not of limitation, to be read by referring to the accompanying drawings, wherein:

- Figure 1 schematically shows a telecommunication network TN for implementing the method according to an embodiment of the present invention;
- Figure 2 schematically shows a portion of an exemplary MIB;
- Figure 3 schematically shows a first example of a request sent by a network management system to an agent of a network element for recovering the MIB portion of Figure 2, and the corresponding response; and
- Figures 4a and 4b schematically show a second example of requests sent by a NMS to an agent of a network element for recovering the MIB portion of Figure 2, and the corresponding responses.

## Detailed description of preferred embodiments of the invention

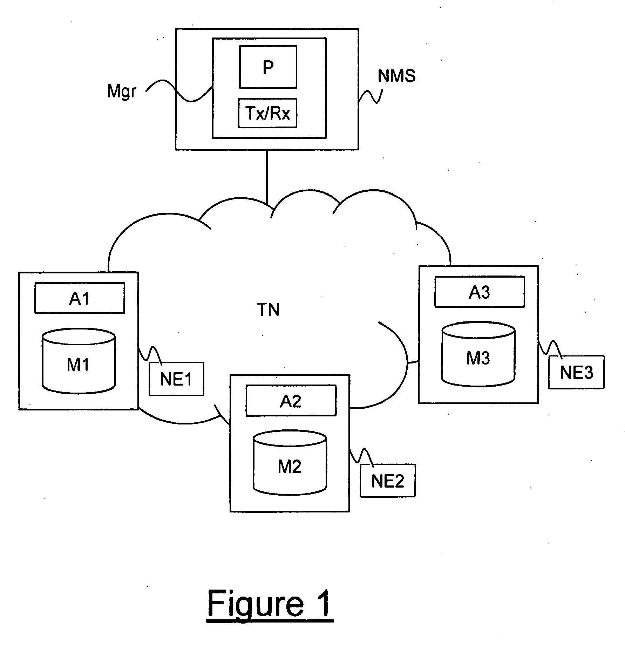

Figure 1 schematically shows a telecommunication network TN for implementing the method according to an embodiment of the present invention. The telecommunication network TN comprises a packet-switched network, such as for instance an Internet network. The network TN comprises a plurality of network elements. For simplicity, Figure 1 only shows three network elements NE1, NE2 and NE3.

The telecommunication network TN is connected to a network management system NMS, which is adapted to perform management operations upon network elements of the network TN, and in particular on the network elements NE1, NE2, NE3. The system NMS has a manager Mgr. The manager Mgr comprises a processor P and a transmitter/receiver Tx/Rx, whose function will be described in greater detail herein after. For interacting with the manager Mgr of the network management system NMS, each network element NE1, NE2, NE3 has a respective agent A1, A2, A3. By assuming that the management protocol is the above cited SNMP protocol, each network element NE1, NE2, NE3 also has a respective MIB M1, M2, M3.

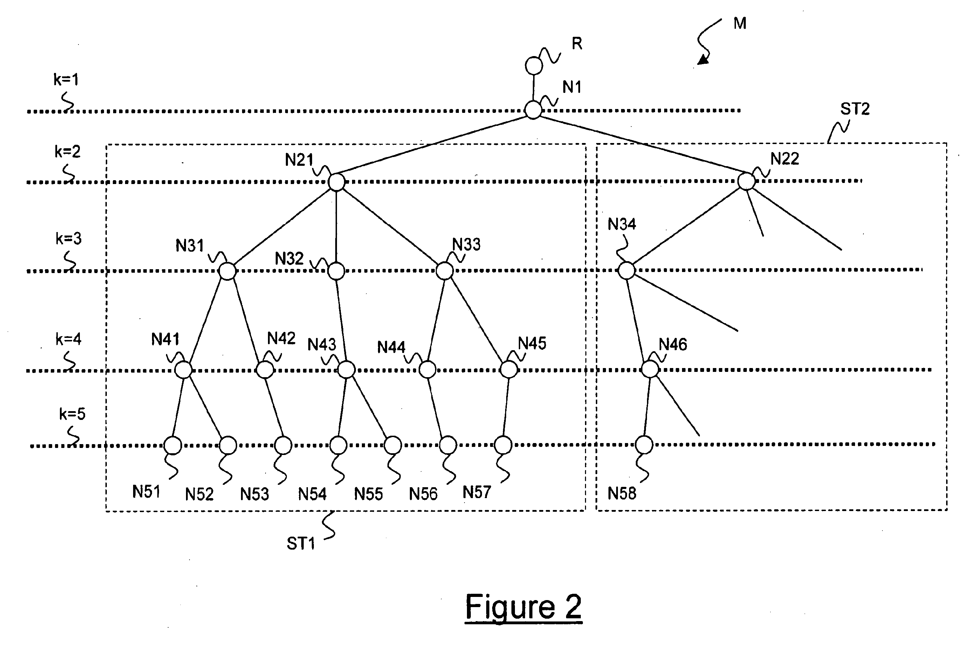

Figure 2 schematically shows a portion of an exemplary MIB M, which for instance may be the MIB M1 of the network element NE1. The MIB M of Figure 2 comprises a root R, having a child node N1 at the layer k=1. This is only exemplary, since the root R may have any number of child nodes at the layer k=1. In turn, the node N1 has two child nodes N21 and N22 at the layer k=2. Again, this is only exemplary, since the node N1 may have any number of child nodes at the layer k=2. In this example, nodes N21 and N22 represent a first and a second tabular managed object, respectively. Therefore, they are roots of a first and a second sub-tree ST1, ST2, respectively. This is only exemplary, since nodes representing managed objects may belong to any other layer of the tree.

Since nodes N21 and N22 represent a first and a second tabular managed objects, their names are a first object identifier and a second object identifier, respectively. In the following description, for simplicity, the first and the second objects identifiers will be referred to as OID1 and OID2, respectively. Since nodes N21 and N22 belong to layer k=2, the object identifiers OID1 and OID2 are sequences of k+1=3 components, i.e.:

- name of node N21: OID1=nr.n1.n21; and
- name of node N22: OID2=nr.n1.n22,

where nr, n1, n21 and n22 are components.

Figure 2 shows the detailed structure of the first sub-tree ST1 only, whose root is the node N21. The node N21 has three child nodes N31, N32, N33 at the layer k=3, which represent partial object instances of the first managed object. Again, this is only exemplary, since N21 may have any number of child nodes. Since nodes N31, N32, N33 belong to layer k=3, their names are sequences of k+1=4 components, i.e.:

- name of node N31: OID1.n31= nr.n1.n21.n31;

- name of node N32: OID1.n32= nr.n1.n21.n32; and
- name of node N33: OID1.n33= nr.n1.n21.n33,

where also n31, n32, n33 are components.

The node N31 has two child nodes N41 and N42 at the layer k=4. Further, the node N32 has one child node N43 at the layer k=4. Further, the node N33 has two child nodes N44 and N45 at the layer k=4. Also the nodes N41, N42, N43, N44, N45 represent partial object instances of the first managed object. Since nodes N41, N42, N43, N44, N45 belong to the layer k=4, their names are sequences of k+1=5 components, i.e.:

- name of node N41: OID1.n31.n41= nr.n1.n21.n31.n41;
- name of node N42: OID1.n31.n42= nr.n1.n21.n31.n42;
- name of node N43: OID1.n32.n43= nr.n1.n21.n32.n43;
- name of node N44: OID1.n33.n44= nr.n1.n21.n33.n44; and
- name of node N45: OID1.n33.n45= nr.n1.n21.n33.n45,

where n41, n42, n43, n44, n45 are also components.

The node N41 has two child nodes N51, N52 at the layer k=5. Further, the node N42 has a child node N53 at the layer k=5. Further, the node N43 has two child nodes N54, N55 at the layer k=5. Further, the node N44 has a child node N56 at the layer k=5. Further, the node N45 has a child node N57 at the layer k=5. Since nodes N51-N57 are leaves of the MIB M of Figure 2, such nodes represent complete object instances of the first managed object represented by the node N21. Since nodes N51-N57 belong to the layer k=5, their names are sequences of k+1=6 components, i.e.:

- name of node N51: OID1.n31.n41.n51= nr.n1.n21.n31.n41.n51;
- name of node N52: OID1.n31.n41.n52= nr.n1.n21.n31.n41.n52;
- name of node N53: OID1.n31.n42.n53= nr.n1.n21.n31.n42.n53;
- name of node N54: OID1.n32.n43.n54= nr.n1.n21.n31.n43.n54;
- name of node N55: OID1.n32.n43.n55= nr.n1.n21.n31.n43.n55;
- name of node N56: OID1.n33.n44.n56= nr.n1.n21.n33.n44.n56; and
- name of node N57: OID1.n33.n45.n57= nr.n1.n21.n33.n45.n57,

wherein also n51, n52, n53, n54, n55, n56, n57 are components. Of course, the values of all the components are chosen so that different nodes have different names or, in other words, each object instance (both partial and complete) of the managed object represented by the node N21 is univocally identified by its name.

In the example of Figure 2, the first tabular managed object is represented by a sub-tree with three layers (except the layer k=2, which comprises the root of the sub-tree). This is only exemplary, since a tabular managed object may be represented by a sub-tree having any number of layers.

Figure 2 does not show in detail the structure of the second sub-tree ST2, but it only shows a branch of the sub-tree comprising: a node N34 at the layer k=3, which is a child of the node N22; a node N46 at the layer k=4, which is a child of the node N34; and a node N58 at the layer k=5, which is a child of the node N46. The names of such nodes are:

- name of node N34: OID2.n34= nr.n1.n22.n34;
- name of node N46: OID2.n34.n46= nr.n1.n22.n34.n46; and
- name of node N58: OID2.n34.n46.n58= nr.n1.n22.n34.n46.n58,

wherein also n22, n34, n46 and n58 are components.

It is now assumed that the network management system NMS of Figure 1 wishes to recover the structure of a portion of the MIB M of Figure 2, e.g. the first sub-tree ST1, representing the first tabular managed object.

According to embodiments of the present invention, the transmitter/receiver Tx/Rx of the manager Mgr sends a structure recovery request to the agent A of the network element comprising the MIB M. The structure recovery request preferably comprises:

- the name of the root of the MIB portion whose structure has to be recovered. By referring to the example of Figure 2, such a name is the name of N21, which corresponds to the object identifier OID1 of the tabular managed object represented by the node N21; and
- an information indicative of the layer(s) at which the system NMS wishes to recover the structure of the MIB portion. By referring to the example of Figure 2, such layers correspond to k=3, k=4, and k=5.

Preferably, the structure recovery request is SNMP-compliant or, in other words, the structure recovery request is formatted as a structure recovery request PDU.

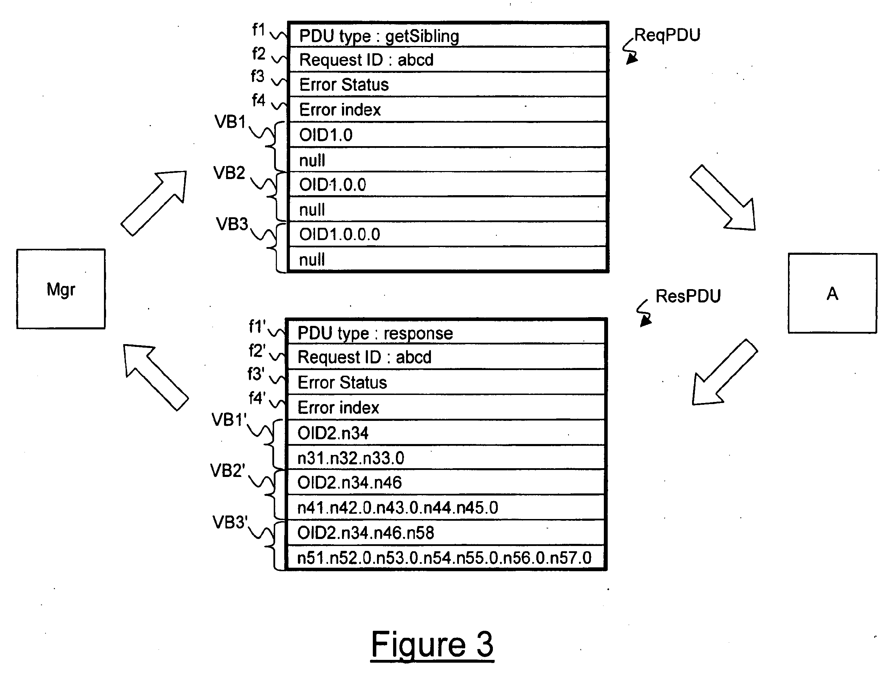

Figure 3 shows a structure recovery request PDU, indicated as ReqPDU, sent by the manager Mgr to the agent A, according to a preferred embodiment of the present invention. Such a unit ReqPDU comprises a first field f1, which comprises a PDU type. In the example of Figure 3, the PDU type of the structure recovery request PDU is "getSibling". Further, the unit ReqPDU comprises a second field f2, which comprises a request identifier (for instance, in Figure 3, "abcd"). Further, the unit ReqPDU comprises a third and a fourth fields f3 and f4 comprising an error status information and an error index information, respectively. Further, the unit ReqPDU comprises three variable bindings VB1, VB2, VB3.

The first variable binding VB1 preferably comprises, in the name field, a sequence of integers having a most significant part corresponding to the name of the root of the MIB portion whose structure has to be recovered, i.e. OID1. The remaining part of the sequence preferably comprises a number of "0" equal to the distance between the layer to which the root of the MIB portion whose structure has to be recovered belongs (i.e. k=2), and the first layer at which the structure of the MIB portion has to be recovered (i.e. k=3). Therefore, the name field of the first variable binding VB1 advantageously comprises:

- OID1.0

The value field of the first variable binding VB1 preferably comprises a predefined value, for instance "null".

Similarly, the second variable binding VB2 preferably comprises, in the name field, a sequence of integers having a most significant part corresponding to the name of the root of the MIB portion whose structure has to be recovered, i.e. OID1. The remaining part of the unique instance identifier preferably comprises a number of "0" equal to the distance between the layer to which the root of the MIB portion whose structure has to be recovered belongs (i.e. k=2), and the second layer at which the structure of the MIB portion has to be recovered (i.e. k=4). Therefore, the name field of the second variable binding VB2 advantageously comprises:

- OID1.0.0

The value field of the second variable binding VB2 preferably also comprises a predefined value, for instance "null".

Similarly, the third variable binding VB3 preferably comprises, in its name field, a sequence of integers having a most significant part corresponding to the name of the root of the MIB portion whose structure has to be recovered, i.e. OID1. The remaining part of the unique instance identifier preferably comprises a number of "0" equal to the distance between the layer to which the root of the MIB portion whose structure has to be recovered belongs (i.e. k=2), and the third layer at which the structure of the MIB portion has to be recovered (i.e. k=5). Therefore, the name field of the third variable binding VB3 advantageously comprises:

- OID1.0.0.0

The value field of the third variable binding VB3 preferably also comprises a predefined value, for instance "null".

After receiving the structure recovery request, the agent processes such a structure recovery request, and then it sends to the manager Mgr a response message. Preferably, the response message comprises, for each layer of the MIB specified in the structure recovery request, a list comprising, for each node belonging to such a layer, the least significant component (i.e. the first component on the right) of the node name.

Preferably, also the response message is SNMP-compliant or, in other words, the response message is formatted as a response PDU.

Figure 3 shows a response PDU, indicated as ResPDU, sent by the agent A to the manager Mgr, according to a preferred embodiment of the present invention. Such a unit ResPDU comprises a first field f1', which comprises a PDU type, which is preferably "response". Further, the unit ResPDU comprises a second field f2' comprising a request identifier, which is preferably equal to the request identifier of the unit ReqPDU, i.e. "abcd". Further, the unit ResPDU comprises a third and a fourth fields f3' and f4' comprising an error status information and an error index information, respectively. Further, the unit ResPDU comprises three variable bindings VB1', VB2', VB3'.

The first variable binding VB1' comprises, in the name field, the name of a node belonging the first requested layer (i.e. k=3) which follows, according to the lexicographic order, the last node for which the unit ResPDU provides the least significant component of the name. Therefore, if the unit ResPDU provides the least significant component of the name of all the nodes at the layer k=3 of the sub-tree ST1, the name field of the first variable binding VB1' comprises the name of the node N34, i.e.:

- OID2.n34

The first variable binding VB1' comprises, in the value field, a list comprising, for each node at the layer k=3 and preceding the node N34 according to the lexicographical order, the least significant component of the name, i.e.:

- n31.n32.n33.0

The character "0" is preferably used as end-value character.

The second variable binding VB2' comprises, in the name field, the name of a node belonging the second requested layer (i.e. k=4) which follows, according to the lexicographic order, the last node for which the unit ResPDU provides the least significant component of the name. Therefore, if the unit ResPDU provides the least significant component of the name of all the nodes at the layer k=4 of the sub-tree ST1, the name field of the second variable binding VB2' comprises the name of the node N46, i.e.:

- OID2.n34.n46

The second variable binding VB2' comprises, in the value field, a list comprising, for each node at the layer k=4 and preceding the node N46 according to the lexicographical order, the least significant component of the name, i.e.:

- n41.n42.0.n43.0.n44.n45.0

The character "0" is preferably used both as end-value character and as a special character for separating components of nodes at the layer k=4 which are child of different nodes at layer k=3.

The third variable binding VB3' comprises, in its name field, the name of a node belonging the third requested layer (i.e. k=5) which follows, according to the lexicographic order, the last node for which the unit ResPDU provides the least significant component of the name. Therefore, if the unit ResPDU provides the least significant component of the name of all the nodes at the layer k=5 of the sub-tree ST1, the name field of the third variable binding VB3' comprises the name of the node N58, i.e.:

- OID2.n34.n46.n58

The third variable binding VB3' comprises, in its value field, a list comprising, for each node at the layer k=5 and preceding the node N58 according to the lexicographical order, the least significant component of the name, i.e.:

- n51.n52.0.n53.0.n54.n55.0.n56.0.n57.0

The character "0" is preferably used both as end-value character and as a special character for separating components of nodes at the layer k=5 which are child of different nodes at layer k=4.

Preferably, in case the structure recovery request PDU comprises a name of a node having no child nodes, the response PDU comprises a variable binding whose value field comprises a predefined value, such as for instance "endOfMIBView".

Moreover, preferably, in case the agent is not able to process one or more variable bindings comprised in a given structure recovery request PDU, the agent replies with a response PDU comprising the variable binding(s) which has/have not been processed. Preferably, such a response PDU further comprises a value "genErr" in the field f3', and an index identifying the variable binding(s) which has/have not been processed in the field f4'.

Upon reception of the response PDU, the system NMS processes the variable bindings of the response PDU through its processor P, and therefore it recovers the structure of the sub-tree ST1 according to components of each requested layer.

Therefore, advantageously, according to embodiments of the present invention, the structure of a (portion of a) MIB is recovered by using a reduced number of messages (only one, in the example of Figure 3) sent by the network management system to the agent of the network element. This advantageously allows to recover at least a portion of a MIB in a much shorter time in comparison to the prior art solution employing "getNext" or "getBulk" PDUs. The Applicant has performed some positive tests showing that, in case of a sub-tree representing a tabular managed object with 3000 object instances, the ratio between the structure recovery time by using "getNext" or "getBulk" PDUs (a few minutes) and the structure recovery time by using the above embodiment of the present invention (few seconds) is equal to 500 about.

Further, advantageously, the response PDU sent by the agent to the network management system does not comprise superfluous information, but it only comprises information which are strictly necessary for recovering the structure of the MIB portion, thus implying a reduction of the bandwidth consumption in comparison to the prior art solution employing "getNext" or "getBulk" PDUs.

In particular, the Applicant has estimated that the ratio between the number of bytes transmitted by the agent to the network management system during a structure recovery operation, according to the above embodiment of the present invention and according to the prior art solution, is equal to:

$$\beta = \frac{A}{A'} = \frac{b^{kmax} + b^{kmax-1} + \dots + b^{kmax-kr-1}}{k\,max\,b^{kmax}}, \qquad [1]$$

wherein b is the average number of child nodes of each intermediate node, kmax is the overall number of MIB layers, kr is the number of layers at which the structure of the MIB portion has to be recovered, and A and A' are calculated according to the following formulas:

$$A = (L_{kmax} + L_{kmax-1} + \dots + L_{kmax-kr+1}) * size(int), \text{ and} \qquad [2]$$

$$A' = L_{kmax} * k\,max * size(int), \qquad [3]$$

$L_i$ being the average number of nodes at the $i^{th}$ layer, while size(int) is the number of bytes used for representing a component.

For instance, for recovering the structure of a sub-tree having a single layer (kr=1), in case the overall number of layers of the MIB is kmax=15, the ratio □ is equal to about 6.66%. Further, for recovering the structure of a sub-tree having a two layers (kr=2), in case the overall number of layers of the MIB is kmax=16, the ratio □ is equal to about 6.56%. Further, for recovering the structure of a sub-tree having a single layer (kr=3), in case the overall number of layers of the MIB is kmax=17, the ratio □ is equal to about 6.53%. Therefore, the ratio □ decreases by increasing the number of layers of the MIB portion whose structure has to be recovered.

Besides, it has to be noticed that while the structure recovery operation by using "getNext" or "getBulk" PDUs is not able to provide information about MIB portions comprising only non-accessible object instances (i.e. object instances having no value), the method according to embodiments of the present invention advantageously allows to include into the recovered structure also non accessible object instances, thus allowing to recover the entire structure.

This advantageously allows, for instance, to apply the method according to embodiments of the present invention for discovering possible sub-trees of a MIB without recovering the whole MIB structure. In other words, this advantageously allows to distinguish, in a MIB comprising different managed objects, scalar managed objects and tabular managed objects. For instance, for a managed object represented by a node belonging to the $k^{th}$ layer of a MIB, it is assumed to have a plurality of object instances, each object instance having a corresponding unique instance identifier. Each node representing an object instance has a respective child node. The name of each child node comprises the unique instance identifier of the respective parent node and a further component. Such a further component may be for instance "1" in case the object instance is tabular, and a value "0" if the object instance is scalar. Therefore, child nodes having a name whose least significant component is "1" are roots of respective sub-trees. By using a recovery request PDU similar to the one of Figure 3, it is advantageously possible to recover the list of least significant components of the child node names, thus determining where possible sub-trees are located.

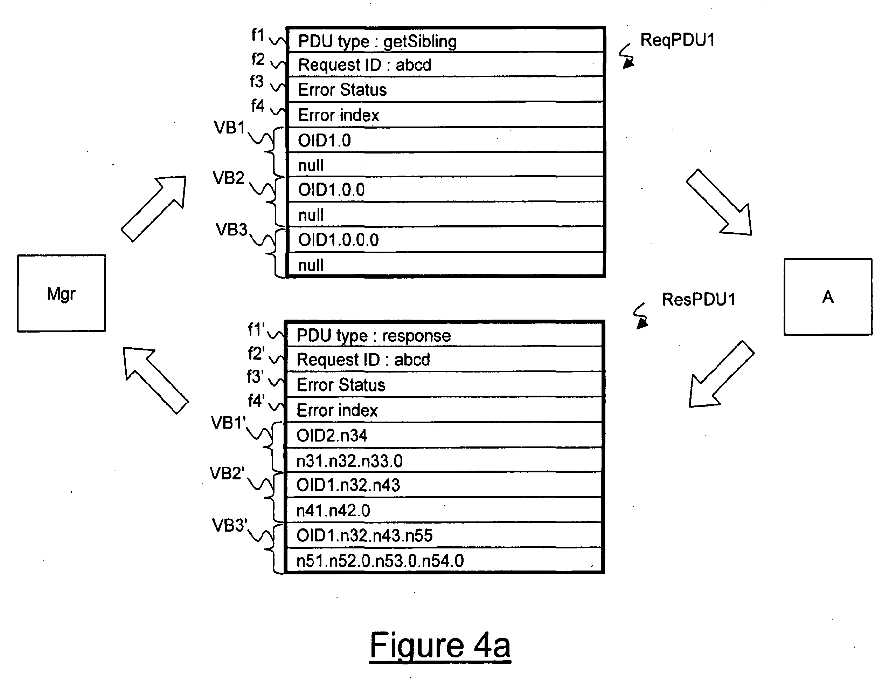

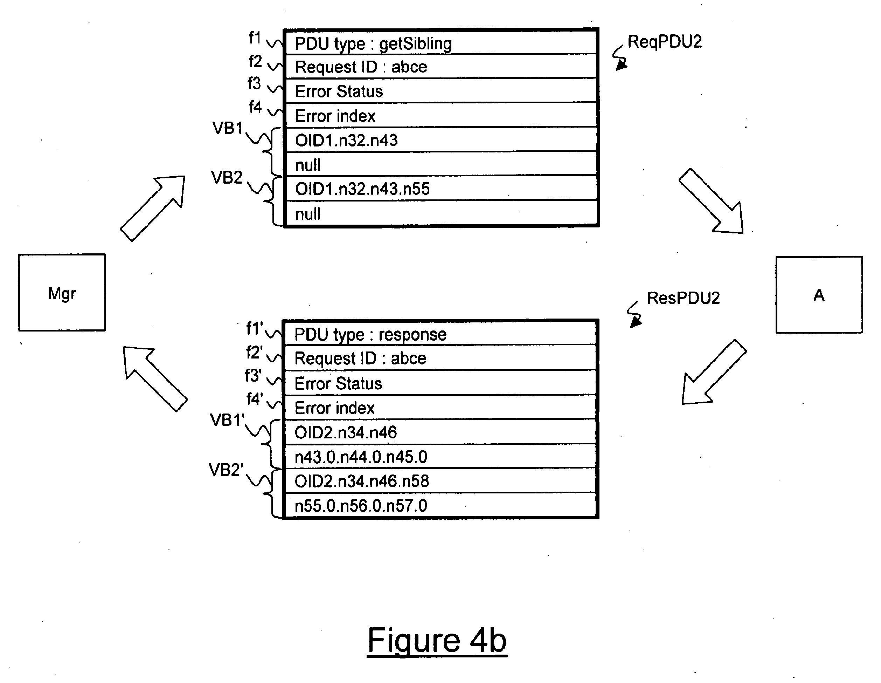

Figures 4a and 4b show a second example of a structure recovery operation of the sub-tree ST1 of Figure 2 performed by the system NMS of Figure 1.

By referring to Figure 4a, the manager Mgr sends a structure recovery request PDU, indicated in Figure 4a as ReqPDU1, to the agent A. Such a unit ReqPDU1 is similar to the unit ReqPDU of Figure 3. However, differently from the example of Figure 3, in Figure 4a the agent replies with a response unit ResPDU1 which does not comprise all the information necessary for recovering the structure of the sub-tree ST1, but only a part. In particular, the unit ResPDU1 comprises the fields f1', f2', f3', f4' identical to the corresponding fields shown in Figure 3. Further, the unit ResPDU1 comprises three variable bindings VB1', VB2', VB3'.

The first variable binding VB1' comprises, in its name field, the name of a node belonging the first requested layer (i.e. k=3) which follows, according to the lexicographic order, the last node for which the unit ResPDU1 provides the least significant component of the name. Similarly to Figure 3, such a node is N34. Therefore, the name field of the first variable binding VB1' comprises the name of the node N34, i.e.:

- OID2.n34

The first variable binding VB1' comprises, in its value field, a list comprising, for each node at the layer k=3 and preceding the node N34 according to the lexicographical order, the least significant component of the name, i.e.:

- n31.n32.n33.0

The character "0" is preferably used as end-value character.

The second variable binding VB2' comprises, in its name field, the name of a node belonging the second requested layer (i.e. k=4) which follows, according to the lexicographic order, the last node for which the unit ResPDU1 provides the least significant component of the name. In Figure 4a, differently from Figure 3, this node belongs to the sub-tree ST1, e.g. it is the node N43. Therefore, the name field of the second variable binding VB2' comprises the name of the node N43, i.e.:

- OID1.n32.n43

The second variable binding VB2' comprises, in its value field, a list comprising, for each node at the layer k=4 and preceding the node N43 according to the lexicographical order, the least significant component of the name, i.e.:

- n41.n42.0

The character "0" is preferably used both as end-value character and as a special character for separating components of nodes at the layer k=4 which are child of different nodes at layer k=3.

The third variable binding VB3' comprises, in its name field, the name of a node belonging the third requested layer (i.e. k=5) which follows, according to the lexicographic order, the last node for which the unit ResPDU1 provides the least significant component of the name. In Figure 4a, differently from Figure 3, this node belongs to the sub-tree ST1, e.g. it is the node N55. Therefore, the name field of the third variable binding VB3' comprises the name of the node N55, i.e.:

- OID1.n32.n43.n55

The third variable binding VB3' comprises, in its value field, a list comprising, for each node at the layer k=5 and preceding the node N55 according to the lexicographical order, the least significant component of the name, i.e.:

- n51.n52.0.n53.0.n54.0

The character "0" is preferably used both as end-value character and as a special character for separating components of nodes at the layer k=5 which are child of different nodes at layer k=4.

Therefore, in this case, if the network management system wishes to recover the structure of the whole sub-tree ST1, it sends a further structure recovery request to the agent, as shown in Figure 4b.

By referring to Figure 4b, the manager Mgr sends to the agent A a structure recovery request PDU, indicated in Figure 4b as ReqPDU2, whose fields f1, f3, f4 are identical to the unit ReqPDU of Figure 4a, while the field f2 comprises a different request identifier (for instance, "abce"). Further, the unit ReqPDU2 comprises two variable bindings VB1, VB2.

The first variable binding VB1 comprises, in its name field, the name of the node belonging to the first layer which has been requested through the unit ReqPDU1 and for which the response unit ResPDU1 has not provided all the components of nodes belonging to that layer. Such a layer, in this example, is k=4, and therefore the node is N43. Therefore, the name field of the first variable binding is the name of N43, i.e.:

- OID1.n32.n43,

while the value field preferably comprises a predefined value (for instance, "null").

The second variable binding VB2 comprises, in its name field, the name of the node belonging to the second layer which has been requested through the unit ReqPDU1 and for which the response unit ResPDU1 has not provided all the components of nodes belonging to that layer. Such a layer, in this example, is k=5, and therefore the node is N55. Therefore, the name field of the first variable binding is the name of N55, i.e.:

- OID1.n32.n43.n55,

while the value field preferably comprises a predefined value (for instance, "null").

The agent A replies to the manager Mgr by sending a further PDU response, which is indicated in Figure 4b as ResPDU2. The unit ResPDU2 comprises the fields f1', f2', f3', f4' which has already been described by referring to Figure 3. Further, the unit ResPDU2 comprises two variable bindings VB1', VB2'.

The first variable binding VB1' comprises, in its name field, the name of the node belonging to the first requested layer (i.e. k=4) which follows, according to the lexicographical order, the last node for which the unit ResPDU2 provides the name least significant component. Since such a node is N46, the name field of the first variable binding VB1' comprises the name of N46, i.e.:

- OID2.n34.n46

The first variable binding VB1' comprises, in its value field, a list comprising, for each node at the layer k=4, following the node N43 and preceding the node N46 according to the lexicographical order, the name least significant component, i.e.:

- n43.0.n44.n45.0

Also in this case, the character "0" is preferably used both as end-value character and as a special character for separating components of nodes at the layer k=4 which are child of different nodes at layer k=3.

The second variable binding VB2' comprises, in its name field, the name of the node belonging to the first requested layer (i.e. k=5) which follows, according to the lexicographical order, the last node for which the unit ResPDU2 provides the name least significant component. Since such a node is N58, the name field of the second variable binding VB2' is the name of N58, i.e.:

- OID2.n34.n46.n58

The second variable binding VB2' comprises, in its value field, a list comprising, for each node at the layer k=5, following the node N55 and preceding the node N58 according to the lexicographical order, the name least significant component, i.e.:

- n55.0.n56.0.n57.0

Also in this case, the character "0" is preferably used both as end-value character and as a special character for separating components of nodes at the layer k=5 which are child of different nodes at layer k=4.

Therefore, according to embodiments of the present invention, a network management system may retrieve all the information required for recovering the structure of a portion of a MIB (i.e. the sub-tree ST1) by using two PDUs similar to the one shown in Figures 4a, 4b and by specifying, for each requested layer, which is the last node for which information has been already received in a preceding response PDU.

**Claims**

1. A method of recovering, at a network management system (NMS), a structure of at least portion (ST1) of a free logically arranged database (M) of a network element (NE1, NE2, NE3) of: a telecommunication network (TN), said database (M) storing information relative to resources of said network element (NE1, NE2, NE3), said portion (ST1) of the database (M) comprising a set of nodes (N41-N45) arranged at a k-th layer (k=4) of said database (M), **characterized in that** said method comprises: :

   - transmitting from said network management system (NMS) to said network element (NE1, No;2, NE3) a structure recovery request (ReqPDU) comprising:

      - an identifier (OID1) of a root (N21) of said portion (ST1) of said database (M); and
      - an Information indicative of said k-th layer (k=4);

   - receiving a response message (ResPDU) at said network management system (NMS) from said network element (NE1, NE2, NE3), said response message (ResPDU) comprising, for at least one node (N41) of said set of nodes (N41-N45), a least significant component of a name of said at least one node (N41), said name corresponding to a sequence of k+1 components; and
   - processing, at said network management system (NMS), said response message (ResPDU) by processing said least significant component, thus recovering said structure of said portion (ST1) of said database (M).

**2.** The method according to claim 1, wherein said structure recovery request (ReqPDU) has a first sequence having a most significant part and a least significant part, the most significant part corresponding to said identifier (OID1), and a least significant part corresponding to said information indicative of said k-th layer, said information indicative of said k-th layer comprising a number of integers, said number being equal to a distance between a layer to which said root (N21) belongs and said layer (k=4) at which said set of nodes (N41-N45) is arranged.

**3.** The method according to claim 2, wherein said structure recovery request (ReqPDU) is formatted as a first Protocol Data Unit, said first sequence being comprised in a variable binding field of said first Protocol Data Unit.

**4.** The method according to any of claim 1 to 3, wherein said set (N41-N45) of nodes is arranged according to a predetermined order, and wherein said response message (ResPDU) comprises a list including, for each node of said set of nodes (N41-N45), a least significant component of the name of the node, said list being ordered according to said predetermined order.

**5.** A network management system (NMS) for recovering a structure of at least portion (ST1) of a tree logically arranged database (M) of a network element (NE1, NE2, NE3) of a telecommunication network (TN), said database (M) storing information relative to resources of said network element (NE1, NE2, NE3), said portion (ST1) of the database (M) comprising a set of nodes (N41-N45) arranged at a k-th layer (k=4) of said database (M), **characterized in that** said network management system (NMS) comprises a manager (Mgr) which in turn comprises:

- a transmitter/receiver (Tx/Rx) adapted to:

- transmit to said network element (NE1, NE2, NE3) a structure recovery request (ReqPDU) comprising:

- an identifier (OID1) of a root (N21) of said portion (ST1) of said database (M); and
- an information indicative of said k-th layer (k-4); and

- receive a response message (ResPDU) from said network element (NE1, NE2, NE3), said response message (ResPDU) comprising, for at least one node (N41) of said set of nodes (N41-N45), a least significant component of a name of said at least one node (N41); and

- a processor (P) for processing said response message (ResPDU) by processing said least significant component, thus recovering said structure of said portion (ST1) of said database (M).

**6.** The network management system (NMS) according to claim 5, wherein said transmitter/receiver (Tx/Rx) is further adapted to combine said identifier (OID1) and said information indicative of said k-th layer (k=4) in a first sequence having a most significant part corresponding to said identifier (OID1), and a least significant part corresponding to said information indicative of said k-th layer, said information indicative of said k-th layer comprising a number of integers, said number being equal to a distance between a layer to which said root (N21) belongs and said k-th layer (k=4) at which said set of nodes (N41-N45) is arranged.

**7.** The network management system (NMS) according to claim 6, wherein said transmitter/receiver (Tx/Rx) is further adapted to format said structure recovery request (ReqPDU) as a first Protocol Data Unit, and to insert said first sequence in a variable binding field of said first Protocol Data Unit.

**8.** A network element (NE1, NE2, NE3) of a telecommunication network (TN), said network element (NE1, NE2, NE3) being adapted to interact with a network management system (NMS) for recovering a structure of at least portion (ST1) of a tree logically arranged database (M) comprised said network element (NE1, NE2, NE3), said database (M) storing information relative to resources of said network element (NE1, NE2, NE3), said portion (ST1) comprising a set of nodes (N41-N45) arranged at a k-th layer (k=4) of said database (M), **characterized in that** said network element (NE1, NE2, NE3) comprises:

- an agent (A) which is adapted to:

- receive from said network management system (NMS) a structure recovery request (ReqPDU) comprising:

- an identifier (OID1) of a root (N21) of said portion (ST1) of said database (M); and
- an information indicative of said k-th layer (k=4); and

- transmit a response message (ResPDU) to said network management element (NMS), said response message (ResPDU) comprising, for at least one node (N41) of said set (N41-N45), a least significant component of a name of said at least one node (N41), said name comprising a sequence of k+1 components.

9. The network element (NE1, NE2, NE3) according to claim 8, wherein said set (N41-N45) of nodes is arranged according to a predetermined order, and wherein said agent (A) is further adapted to insert in said response message (ResPDU) a list including, for each node of said set of nodes (N41-N45), a least significant component of the name of the node, said list being ordered according to said predetermined order.

10. The network element (NE1, NE2, NE3) according to claim 8, wherein said set (N41-N45) of nodes includes a sub-set of nodes (N41, N42) arranged according to a predetermined order, and wherein said agent (A) is further adapted to insert in said response message (ResPDU) a list including, for each node of said sub-set of nodes (N41, N21), a least significant component of a name of the node, said list being ordered according to said predetermined order.

11. The network element (NE1, NE2, NE3) according to claim 10, wherein said agent (A) is further adapted to insert in said response message (ResPDU) an information indicative of a node (N43) which immediately follows, according to said predetermined order, said sub-set of nodes (N41, N42).

12. The network element (NE1, NE2, NE3) according to any of claims 9 to 11, wherein said agent (A) is further adapted to format said response message (ResPDU) as a second Protocol Data Unit, and to insert said list in a variable binding field of said second Protocol Data Unit.

13. A telecommunication network (TN) comprising a network management system (NMS) according to claim 6 or 7 and a network element (NE1, NE2, NE3) according to any of claims 8 to 12.

**Patentansprüche**

1. Verfahren zur Rückgewinnung, an einem Netzwerkverwaltungssystem (NMS), einer Struktur zumindest eines Teils (ST1) einer gemäß einer Baumlogik gegliederten Datenbank (M) eines Netzwerkelements (NE1, NE2, NE3) eines Telekommunikationsnetzwerks (TN), wobei die besagte Datenbank (M) Informationen in Bezug auf Ressourcen des besagten Netzwerkelements (NE1, NE2, NE3) speichert, wobei der besagte Teil (ST1) der Datenbank (M) einen Satz von auf der k-ten Schicht (k=4) der besagten Datenbank (M) angeordneten Knoten (N41-N45) umfasst, **dadurch gekennzeichnet, dass** das besagte Verfahren umfasst:

- Übertragen, von dem besagten Netzwerkverwaltungssystem (NMS) an das besagte Netzwerkelement (NE1, NE2, NE3), einer Strukturrückgewinnungsanforderung (ReqPDU), umfassend:

- Eine Kennung (OID1) einer Wurzel (N21) des besagten Teils (ST1) der besagten Datenbank (M); und
- eine Information, welche für die besagte Schicht (k=4) indikativ ist (k=4);

- Empfangen einer Antwortnachricht (ResPDU) an dem besagten Netzwerkverwaltungssystem (NMS) von dem besagten Netzwerkelement (NE1, NE2, NE3), wobei die besagte Antwortnachricht (ResPDU) für mindestens einen Knoten (N41) des besagten Satzes von Knoten (N41-N45) eine niedrigstsignifikante Komponente eines Namens des besagten mindestens einen Knotens (N41) enthält, wobei der besagte Name einer Sequenz von k+1 Komponenten entspricht; und
- Verarbeiten, an dem besagten Netzwerkverwaltungssystem (NMS), der besagten Antwortnachricht (ResPDU) durch Verarbeiten der besagten niedrigstsignifikanten Komponente, und somit Rückgewinnen der besagten Struktur des besagten Teils (ST1) der besagten Datenbank (M).

2. Verfahren nach Anspruch 1, wobei die besagte Strukturrückgewinnungsanforderung (ReqPDU) eine erste Sequenz mit einem höchstsignifikanten Teil und einem niedrigstsignifikanten Teil aufweist, wobei der höchstsignifikante Teil der besagten Kennung (OID1) entspricht und ein niedrigstsignifikanter Teil der besagten Information, welche für die besagte k-te Schicht indikativ ist, entspricht, wobei die besagte Information, welche für die besagte k-te Schicht indikativ ist, eine Anzahl von ganzen Zahlen enthält, wobei die besagte Zahl einer Distanz zwischen einer Schicht, welcher die besagte Wurzel (N21) angehört, und der besagten Schicht (k=4), auf welcher der besagte Satz von Knoten (N41-N45) angeordnet ist, entspricht.

3. Verfahren nach Anspruch 2, wobei die besagte Strukturrückgewinnungsanforderung (ReqPDU) als eine erste Protokolldateneinheit formatiert ist, wobei die besagte erste Sequenz in einem Variablenbindungsfeld der besagten ersten Protokolldateneinheit enthalten ist.

4. Verfahren nach einem beliebigen der Ansprüche 1 bis 3, wobei der besagte Satz (N41-N45) von Knoten in einer vorbestimmten Reihenfolge angeordnet ist, und wobei die besagte Antwortnachricht (ResPDU) eine Liste umfasst, welche für einen jeden Knoten des besagten Satzes von Knoten (N41-N45) eine niedrigstsignifikante Komponente des Namens des Knotens enthält, wobei die besagte Liste gemäß der besagten vorbestimmten Reihenfolge geordnet ist.

5. Netzwerkverwaltungssystem (NMS) zur Rückgewinnung einer Struktur mindestens eines Teils (ST1) einer gemäß einer Baumlogik gegliederten Datenbank (M) eines Netzwerkelements (NE1, NE2, NE3) eines Telekommunikationsnetzwerks (TN), wobei die besagte Datenbank (M) Informationen in Bezug auf Ressourcen des besagten Netzwerkelements (NE1, NE2, NE3) speichert, wobei der besagte Teil (ST1) der Datenbank (M) einen Satz von auf der k-ten Schicht (k=4) der besagten Datenbank (M) angeordneten Knoten (N41-N45) umfasst, **dadurch gekennzeichnet, dass** das besagte Netzwerkverwaltungssystem (NMS) einen Manager (Mgr) umfasst, welcher seinerseits umfasst:

  - Einen Transceiver (Tx/Rx), ausgelegt für:

    - Das Übertragen, an das besagte Netzwerkelement (NE1, NE2, NE3), einer Strukturrückgewinnungsanforderung (ReqPDU), welche enthält:

      - Eine Kennung (OID1) einer Wurzel (N21) des besagten Teils (ST1) der besagten Datenbank (M); und
      - eine Information, welche für die besagte k-te Schicht (k=4) indikativ ist (k=4); und

    - das Empfangen einer Antwortnachricht (ResPDU) von dem besagten Netzwerkelement (NE1, NE2, NE3), wobei die besagte Antwortnachricht (ResPDU) für mindestens einen Knoten (N41) des besagten Satzes von Knoten (N41-N45) eine niedrigstsignifikante Komponente eines Namens des besagten mindestens einen Knotens (N41) enthält; und

    - einen Prozessor (P) für das Verarbeiten der besagten Antwortnachricht (ResPDU) durch Verarbeiten der besagten niedrigstsignifikanten Komponente, und somit Rückgewinnen der besagten Struktur des besagten Teils (ST1) der besagten Datenbank (M).

6. Netzwerkverwaltungssystem (NMS) nach Anspruch 5, wobei der besagte Transceiver (Tx/Rx) weiterhin für das Kombinieren der besagten Kennung (OID1) und der besagten Information, welche für die besagte k-te Schicht (k=4) in einer ersten Sequenz mit einem höchstsignifikanten Teil, welcher der besagten Kennung (OID1) entspricht, und einem niedrigstsignifikanten Teil, welcher der besagten Information, die für die besagte k-te Schicht indikativ ist, ausgelegt ist, wobei die besagte für die besagte k-te Schicht indikative Information eine Anzahl von ganzen Zahlen enthält, wobei die besagte Anzahl einer Distanz zwischen einer Schicht, welcher die besagte Wurzel (N21) angehört, und der besagten k-ten Schicht (k=4), auf welcher der besagte Satz von Knoten (N41-N45) angeordnet ist, entspricht.

7. Netzwerkverwaltungssystem (NMS) nach Anspruch 6, wobei der besagte Transceiver (Tx/Rx) weiterhin für die Formatierung der besagten Strukturrückgewinnungsanforderung (ReqPDU) als eine erste Protokolldateneinheit und für das Einfügen der besagten ersten Sequenz in ein Variablenbindungsfeld der besagten ersten Protokolldateneinheit ausgelegt ist.

8. Netzwerkelement (NE1, NE2, NE3) eines Telekommunikationsnetzwerks (TN), wobei das besagte Netzwerkelement (NE1, NE2, NE3) dazu ausgelegt ist, mit einem Netzwerkverwaltungssystem (NMS) für die Rückgewinnung einer Struktur mindestens eines Teils (ST1) einer in dem Netzwerkelement (NE1, NE2, NE3) enthaltenen gemäß einer Baumlogik gegliederten Datenbank (M) zu interagieren, wobei die besagte Datenbank (M) Informationen in Bezug auf Ressourcen des besagten Netzwerkelements (NE1, NE2, NE3) speichert, wobei der besagte Teil (ST1) einen Satz von auf der k-ten Schicht (k=4) der besagten Datenbank (M) angeordneten Knoten (N41-N45) umfasst, **dadurch gekennzeichnet, dass** das besagte Netzwerkelement (NE1, NE2, NE3) umfasst:

  - Einen Agent (A), ausgelegt für:

- Den Empfang, von dem besagten Netzwerkverwaltungssystem (NMS), einer Strukturrückgewinnungsanforderung (ReqPDU), welche enthält:

    - Eine Kennung (OID1) einer Wurzel (N21) des besagten Teils (ST1) der besagten Datenbank (M); und
    - eine Information, welche für die besagte k-te Schicht (k=4) indikativ ist (k=4); und

- die Übertragung einer Antwortnachricht (ResPDU) an das besagte Netzwerkverwaltungssystem (NMS), wobei die besagte Antwortnachricht (ResPDU) für mindestens einen Knoten (N41) des besagten Satzes von Knoten (N41-N45) eine niedrigstsignifikante Komponente eines Namens des besagten mindestens einen Knotens (N41) enthält, wobei der Name eine Sequenz von k+1 Komponenten enthält.

9. Netzwerkelement (NE1, NE2, NE3) nach Anspruch 8, wobei der besagte Satz (N41-N45) von Knoten gemäß einer vorbestimmten Reihenfolge angeordnet ist, und wobei der besagte Agent (A) weiterhin für das Einfügen einer Liste, welche für jeden Knoten des besagten Satzes von Knoten (N41-N45) eine niedrigstsignifikante Komponente des Namens des Knotens enthält, in die besagte Antwortnachricht (ResPDU) ausgelegt ist, wobei die besagte Liste gemäß der besagten vorbestimmten Reihenfolge geordnet ist.

10. Netzwerkelement (NE1, NE2, NE3) nach Anspruch 8, wobei der besagte Satz (N41-N45) von Knoten einen Teilsatz von Knoten (N41, N42), welche gemäß einer vorbestimmten Reihenfolge angeordnet sind, umfasst, und wobei der besagte Agent (A) weiterhin für das Einfügen einer Liste, welche für jeden Knoten des besagten Teilsatzes von Knoten (N41, N42) eine niedrigstsignifikante Komponente eines Namens des Knotens enthält, in die besagte Antwortnachricht (ResPDU) ausgelegt ist, wobei die besagte Liste gemäß der besagten vorbestimmten Reihenfolge geordnet ist.

11. Netzwerkelement (NE1, NE2, NE3) nach Anspruch 10, wobei der besagte Agent (A) weiterhin für das Einfügen einer Information, welche für einen Knoten (N43), der dem besagten Teilsatz von Knoten (N41, N42) gemäß der besagten vorbestimmten Reihenfolge unmittelbar folgt, indikativ ist, in die besagte Antwortnachricht (ResPDU) ausgelegt ist.

12. Netzwerkelement (NE1, NE2, NE3) nach einem beliebigen der Ansprüche 9 bis 11, wobei der besagte Agent (A) weiterhin für das Formatieren der besagten Antwortnachricht (ResPIDU) als eine zweite Protokolldateneinheit und für das Einfügen der besagten Liste in ein Variablenbindungsfeld der besagten zweiten Protokolldateneinheit ausgelegt ist.

13. Telekommunikationsnetzwerk (TN), umfassend ein Netzwerkverwaltungssystem (NMS) gemäß Anspruch 6 oder 7, und ein Netzwerkelement (NE1, NE2, NE3) gemäß einem beliebigen der Ansprüche 8 bis 12.

**Revendications**

1. Procédé de récupération, dans un système de gestion de réseau (NMS), d'une structure d'au moins une partie (ST1) d'une base de données organisée en arborescence (M) d'un élément de réseau (NE1, NE2, NE3) d'un réseau de télécommunication (TN), ladite base de données (M) stockant des informations relatives aux ressources dudit élément de réseau (NE1, NE2, NE3), ladite partie (ST1) de la base de données (M) comprenant un ensemble de noeuds (N41 à N45) organisé au niveau d'une k$^{\text{ème}}$ couche (k=4) de ladite base de données (M), **caractérisé en ce que** ledit procédé comprend les étapes suivantes :

    - transmettre entre ledit système de gestion de réseau (NMS) et ledit élément de réseau (NE1, NE2, NE3) une demande de récupération de structure (ReqPDU) comprenant :

        - un identifiant (OID1) d'une racine (N21) de ladite partie (ST1) de ladite base de données (M) ; et
        - une information indiquant ladite k$^{\text{ème}}$ couche (k=4) ;

    - recevoir un message de réponse (ResPDU) au niveau dudit système de gestion de réseau (NMS) provenant dudit élément de réseau (NE1, NE2, NE3), ledit message de réponse (ResPDU) comprenant, pour au moins un noeud (N41) dudit ensemble de noeuds (N41 à N45), un composant le moins important d'un nom dudit au moins un noeud (N41 ledit nom correspondant à une séquence de k+1 composants ; et
    - traiter, au niveau dudit système de gestion de réseau (NMS), ledit message de réponse (ResPDU) en traitant ledit composant le moins important, afin de récupérer ladite structure de ladite partie (ST1) de ladite base de données (M).

2. Procédé selon la revendication 1, dans lequel ladite demande de récupération de structure (ReqPDU) comporte une première séquence présentant une partie la plus importante et une partie la moins importante, la partie la plus importante correspondant audit identifiant (OID1), et une partie la moins importante correspondant à ladite information indiquant ladite $k^{ème}$ couche, ladite information indiquant ladite $k^{ème}$ couche comprenant plusieurs nombres entiers, ledit nombre étant égal à une distance entre une couche à laquelle ladite racine (N21) appartient et ladite couche (k=4) au niveau de laquelle ledit ensemble de noeuds (N41 à N45) est organisé.

3. Procédé selon la revendication 2, dans lequel ladite demande de récupération de structure (ReqPDU) est formatée comme une première unité de données de protocole, ladite première séquence étant comprise dans un champ de liaison de variables de ladite première unité de données de protocole.

4. Procédé selon l'une quelconque des revendications 1 à 3, dans lequel ledit ensemble (N41 à N45) de noeuds est organisé selon un ordre prédéterminé, et dans lequel ledit message de réponse (ResPDU) comprend une liste comprenant, pour chaque noeud dudit ensemble de noeuds (N41 à N45), un composant le moins important du nom du noeud, ladite liste étant ordonnée selon ledit ordre prédéterminé.

5. Système de gestion de réseau (NMS) pour récupérer une structure d'au moins une partie (ST1) d'une base de données organisée en arborescence (M) d'un élément de réseau (NE1, NE2, NE3) d'un réseau de télécommunication (TN), ladite base de données (M) stockant des informations relatives aux ressources dudit élément de réseau (NE1, NE2, NE3), ladite partie (ST1) de la base de données (M) comprenant un ensemble de noeuds (N41 à N45) organisé au niveau d'une $k^{ème}$ couche (k=4) de ladite base de données (M), **caractérisé en ce que** ledit système de gestion de réseau (NMS) comprend un gestionnaire (Mgr) qui à son tour comprend :

   - un émetteur/récepteur (Tx/Rx) adapté pour :

      - transmettre audit élément de réseau (NE1, NE2, NE3) une demande de récupération de structure (ReqPDU) comprenant :

         - un identifiant (OID1) d'une racine (N21) de ladite partie (ST1) de ladite base de données (M) ; et
         - une information indiquant ladite $k^{éme}$ couche (k=4) ; et

      - recevoir un message de réponse (ResPDU) provenant dudit élément de réseau (NE1, NE2, NE3), ledit message de réponse (ResPDU) comprenant, pour au moins un noeud (N41) dudit ensemble de noeuds (N41 à N45), un composant le moins important d'un nom dudit au moins un noeud (N41) ; et

   - un processeur (P) pour traiter ledit message de réponse (ResPDU) en traitant ledit composant le moins important, afin de récupérer ladite structure de ladite partie (ST1) de ladite base de données (M).

6. Système de gestion de réseau (NMS) selon la revendication 5, dans lequel ledit émetteur/récepteur (Tx/Rx) est en outre adapté pour combiner ledit identifiant (OID1) et ladite information indiquant ladite $k^{éme}$ couche (k=4) dans une première séquence présentant une partie la plus importante correspondant audit identifiant (OID1), et une partie la moins importante correspondant à ladite information indiquant ladite $k^{ème}$ couche, ladite information indiquant ladite $k^{ème}$ couche comprenant plusieurs nombres entiers, ledit nombre étant égal à une distance entre une couche à laquelle ladite racine (N21) appartient et ladite $k^{ème}$ couche (K=4) au niveau de laquelle ledit ensemble de noeuds (N41-N45) est organisé.

7. Système de gestion de réseau (NMS) selon la revendication 6, dans lequel ledit émetteur/récepteur (Tx/Rx) est en outre adapté pour formater ladite demande de récupération de structure (ReqPDU) comme une première unité de données de protocole, et pour insérer ladite première séquence dans un champ de liaison de variables de ladite première unité de données de protocole.

8. Élément de réseau (NE1, NE2, NE3) d'un réseau de télécommunication (TN), ledit élément de réseau (NE1, NE2, NE3) étant adapté pour interagir avec un système de gestion de réseau (NMS) pour récupérer une structure d'au moins une partie (ST1) d'une base de données organisée en arborescence (M) comprenant ledit élément de réseau (NE1, NE2, NE3), ladite base de données (M) stockant des informations relatives aux ressources dudit élément de réseau (NE1, NE2, NE3), ladite partie (ST1) comprenant un ensemble de noeuds (N41 à N45) organisé au niveau d'une k$^{ème}$ couche (k=4) de ladite base de données (M), **caractérisé en ce que** ledit élément de réseau (NE1, NE2, NE3) comprend :

- un agent (A) qui est adapté pour :

- recevoir dudit système de gestion de réseau (NMS) une demande de récupération de structure (ReqPDU) comprenant :

- un identifiant (OID1) d'une racine (N21) de ladite partie (ST1) de ladite base de données (M) ; et
- une information indiquant ladite k$^{ème}$ couche (k=4) ; et

- transmettre un message de réponse (ResPDU) audit élément de gestion de réseau (NMS), ledit message de réponse (ResPDU) comprenant, pour au moins un noeud (N41) dudit ensemble (N41 à N45), un composant le moins important d'un nom dudit au moins un noeud (N41), ledit nom comprenant une séquence de k+1 composants.

9. Élément de réseau (NE1, NE2, NE3) selon la revendication 8, dans lequel ledit ensemble (N41 à N45) de noeuds est organisé selon un ordre prédéterminé, et dans lequel ledit agent (A) est en outre adapté pour insérer dans ledit message de réponse (ResPDU) une liste comprenant, pour chaque noeud dudit ensemble de noeuds (N41 à N45), un composant le moins important du nom du noeud, ladite liste étant ordonnée selon ledit ordre prédéterminé.

10. Élément de réseau (NE1, NE2, NE3) selon la revendication 8, dans lequel ledit ensemble (N41 à N45) de noeuds comprend un sous-ensemble de noeuds (N41, N42) organisé selon un ordre prédéterminé, et dans lequel ledit agent (A) est en outre adapté pour insérer dans ledit message de réponse (ResPDU) une liste comprenant, pour chaque noeud dudit sous-ensemble de noeuds (N41, N21), un composant le moins important d'un nom du noeud, ladite liste étant ordonnée selon ledit ordre prédéterminé.

11. Élément de réseau (NE1, NE2, NE3) selon la revendication 10, dans lequel ledit agent (A) est en outre adapté pour insérer dans ledit message de réponse (ResPDU) une information indiquant un noeud (N43) qui suit immédiatement, conformément audit ordre prédéterminé, ledit sous-ensemble de noeuds (N41, N42).

12. Élément de réseau (NE1, NE2, NE3) selon l'une quelconque des revendications 9 à 11, dans lequel ledit agent (A) est en outre adapté pour formater ledit message de réponse (ResPDU) comme une deuxième unité de données de protocole, et pour insérer ladite liste dans un champ de liaison de variables de ladite deuxième unité de données de protocole.

13. Réseau de télécommunication (TN) comprenant un système de gestion de réseau (NMS) selon la revendication 6 ou 7 et un élément de réseau (NE1, NE2, NE3) selon l'une quelconque des revendications 8 à 12.

Figure 1

Figure 2

Figure 3

| | f1 | PDU type : getSibling |
|---|---|---|
| | f2 | Request ID : abcd |
| | f3 | Error Status |
| | f4 | Error index |
| VB1 | | OID1.0 |
| | | null |
| VB2 | | OID1.0.0 |
| | | null |
| VB3 | | OID1.0.0.0 |
| | | null |

ReqPDU

| | f1' | PDU type : response |
|---|---|---|
| | f2' | Request ID : abcd |
| | f3' | Error Status |
| | f4' | Error index |
| VB1' | | OID2.n34 |
| | | n31.n32.n33.0 |
| VB2' | | OID2.n34.n46 |
| | | n41.n42.0.n43.0.n44.n45.0 |
| VB3' | | OID2.n34.n46.n58 |
| | | n51.n52.0.n53.0.n54.n55.0.n56.0.n57.0 |

ResPDU

Mgr

A

EP 1 916 798 B1

**Figure 4a**

f1 — PDU type : getSibling — ReqPDU2

f2 — Request ID : abce

f3 — Error Status

f4 — Error index

VB1 — OID1.n32.n43 / null

VB2 — OID1.n32.n43.n55 / null

Mgr

A

EP 1 916 798 B1

f1' — PDU type : response — ResPDU2

f2' — Request ID : abce

f3' — Error Status

f4' — Error index

VB1' — OID2.n34.n46 / n43.0.n44.0.n45.0

VB2' — OID2.n34.n46.n58 / n55.0.n56.0.n57.0

## Figure 4b